# EUROPEAN PATENT APPLICATION

(11) **EP 4 697 858 A1**
(43) Date of publication of application: **18.02.2026**
(21) Application number: 24848035.2
(22) Date of filing: 18.07.2024
(51) Int. Cl.: H04W 88/06, H04W 36/14

(54) **METHOD AND APPARATUS FOR CALL SWITCHING, AND ELECTRONIC DEVICE**

(30) Priority: 31.07.2023 CN 202310961334
(71) Applicant: Huawei Technologies Co., Ltd., Shenzhen, Guangdong 518129 (CN)
(72) Inventor: LI, Jinkui, Shenzhen, Guangdong 518129 (CN)
(74) Representative: Maiwald GmbH
(86) International application number: PCT/CN2024/106161
(87) International publication number: WO 2025/026076

(57) **Abstract**

This application provides a call switching method and apparatus, and an electronic device. The method is applicable to the electronic device. The electronic device includes a first modem configured to process data of a first call and a second modem configured to process data of a second call. The first modem and the second modem support different call protocols. The electronic device obtains a second call request when being in a first call state, and switches the first call to the second call in response to an operation of a user on the second call request. According to the call switching method in this application, the electronic device can carry a plurality of modems supporting different call protocols, and can flexibly switch between call states of different call protocols, to meet call requirements of the user.

## Description

This application claims priority to Chinese Patent Application No. 202310961334.4, filed with the China National Intellectual Property Administration on July 31, 2023 and entitled "CALL SWITCHING METHOD AND APPARATUS, AND ELECTRONIC DEVICE", which is incorporated herein by reference in its entirety.

### TECHNICAL FIELD

Embodiments of this application relate to the field of electronic devices, and in particular, to a call switching method and apparatus, and an electronic device.

### BACKGROUND

With the development of science and technology, a user can make a call on an electronic device like a mobile phone terminal or a tablet computer. Generally, it is difficult to implement complete compatibility of a plurality of call protocols with one modem (modem) component carried on the electronic device, and therefore a plurality of modem components need to be carried to implement compatibility of the plurality of call protocols on the same electronic device. However, in a process in which the user actually makes the call on the electronic device, there may be a call switching requirement. The electronic device carrying the plurality of modem components also needs to switch a modem component with call switching of the user, to ensure call effect when the user switches the call.

Therefore, how to switch a modem component, and simultaneously switch a physical path and data path, to ensure call effect when a user switches a call is an urgent problem to be resolved currently.

### SUMMARY

This application provides a call switching method and apparatus, and an electronic device. The method can be used to switch a physical path and data path of a modem component in real time and ensure call effect when a user switches a call.

According to a first aspect, a call switching method is provided. The method is applied to an electronic device and includes: the electronic device includes a first modem and a second modem, the first modem is configured to process data of a first call, the second modem is configured to process data of a second call, and a call protocol of the first call is different from a call protocol of the second call; obtaining a second call request when the electronic device is in a first call state; and switching the first call to the second call in response to an operation of a user on the second call request.

For example, the first modem may be carried in a system on a chip of the electronic device, and the second modem may be externally connected to the original chip; or the first modem may be externally connected to the original chip, and the second modem may be carried in the system on a chip of the electronic device. The first modem is further configured to receive the data of the first call and/or send the data of the first call, and the second modem is further configured to receive the data of the second call and/or send the data of the second call. The second call request may be displayed on a user interface in a form of information (for example, incoming call information), an option, or a control.

Based on the foregoing solution, the electronic device can carry a plurality of modems supporting different call protocols, and the electronic device can flexibly switch between call states of the plurality of different call protocols, to meet different call requirements of the user, and ensure a normal call function while the user is unaware of a switching function.

With reference to the first aspect, in some implementations of the first aspect, when the electronic device is in the first call state, an audio physical path of the first call and an audio data path of the first call are established; and switching to the second call in response to the operation of the user on the second call request includes: switching the audio physical path of the first call to an audio physical path of the second call in response to the operation of the user on the second call request; and switching the audio data call of the first call to an audio data path of the second call.

It should be noted that when the electronic device is in the first call state, the first modem is connected, and correspondingly, the audio physical path of the first call and the audio data path of the first call are established, so that a call function of the first call is normal. Therefore, to ensure a normal call function after the call is switched, the audio physical path and the audio data path also need to be correspondingly switched.

For example, establishment of the audio physical path of the second call enables establishment of the second modem, an uplink device (for example, a microphone), and a downlink device (for example, a speaker) of the electronic device. Establishment of the audio data path of the second call may implement selection of an audio data source and a consumption route and implement a data movement function by configuring corresponding direct memory access (direct memory access, DMA).

Based on the foregoing solution, in a call switching process, the corresponding audio physical path and audio data path are correspondingly switched, to ensure the normal call function.

With reference to the first aspect, in some implementations of the first aspect, before the electronic device is in the first call state, the method further includes: displaying, by the electronic device, a first modem control and a second modem control; obtaining first control information in response to an operation of the user on the first modem control, where the first control information is used to control the electronic device to make a call through the first modem; and triggering the first call based on the first control information.

For example, the first control information may be understood as a use status of the first modem, and the use status of the first modem may be understood as using the first modem for a call. In other words, the electronic device may implement call switching based on the use status of the modem.

Based on the foregoing solution, before a call, the electronic device may trigger the corresponding call based on an operation of the user on the user interface. In other words, the user may flexibly trigger different calls on the electronic device based on an actual requirement.

With reference to the first aspect, in some implementations of the first aspect, before switching the first call to the second call, the method further includes: obtaining second control information, where the second control information is used to control the electronic device to make a call through the second modem.

For example, the second control information may be understood as a use status of the second modem, and the use status of the second modem may be understood as using the second modem for a call.

Based on the foregoing solution, the electronic device receives a call request of another call protocol when the electronic device is in a call state. When receiving the call request, the electronic device may display the call request on the interface of the electronic device. For example, the call request may be displayed on the interface of the electronic device in a form of incoming call information. The user may trigger, by performing an operation on the user interface, the electronic device to obtain the second control information.

With reference to the first aspect, in some implementations of the first aspect, the method further includes: storing the second control information.

Based on the foregoing solution, after obtaining the second control information, the electronic device may synchronously store the second control information in a partition (for example, a non-volatile (non-volatile, NV) partition). In other words, a partition in the electronic device may update a use status of a modem in real time. In this way, when the electronic device cannot implement call switching based on the use status of the modem, the electronic device can invoke the use status of the modem in the partition in a next attempt of call switching, to reduce power consumption of next call switching.

With reference to the first aspect, in some implementations of the first aspect, the call protocol of the first call is a session description protocol, and the call protocol of the second call is a satellite call protocol; or the call protocol of the first call is the satellite call protocol, and the call protocol of the second call is the session description protocol.

In other words, the first modem supports the SDP call protocol, and the second modem supports the satellite call protocol; or the first modem supports the satellite call protocol, and the second modem supports the SDP call protocol.

Based on the foregoing solution, the electronic device can support a call function of the satellite call protocol, and further can implement dynamic switching between the SDP call protocol and the satellite call protocol, to meet different call requirements of the user.

For example, when the electronic device is making a call by using the satellite call protocol, the electronic device may further receive another call request. The another call request may be a call request supporting the satellite call protocol, or may be a call request supporting the SDP call protocol. When the electronic device responds to a call switching operation of the user, an audio physical path and an audio data path of the electronic device may also be switched correspondingly.

According to a second aspect, an electronic device is provided and includes one or more processors and one or more memories. The one or more memories store one or more computer programs, the one or more computer programs include instructions, and when the instructions are executed by the one or more processors, the electronic device is enabled to perform the following steps: the electronic device includes a first modem and a second modem, the first modem is configured to process data of a first call, the second modem is configured to process data of a second call, and a call protocol of the first call is different from a call protocol of the second call; obtaining a second call request when the electronic device is in a first call state; and switching the first call to the second call in response to an operation of a user on the second call request.

With reference to the second aspect, in some implementations of the second aspect, when the electronic device is in the first call state, an audio physical path of the first call and an audio data path of the first call are established; and switching the first call to the second call in response to the operation of the user on the second call request, where when the instructions are executed by the one or more processors, the electronic device is enabled to perform the following steps: switching the audio physical path of the first call to an audio physical path of the second call in response to the operation of the user on the second call request; and switching the audio data call of the first call to an audio data path of the second call.

With reference to the second aspect, in some implementations of the second aspect, when the instructions are executed by the one or more processors, the electronic device is enabled to perform the following steps: before the electronic device is in the first call state, displaying, by the electronic device, a first modem control and a second modem control; obtaining, by the electronic device, first control information in response to an operation of the user on the first modem control, where the first control information is used to control the electronic device to make a call through the first modem; and triggering the first call based on the first control information.

With reference to the second aspect, in some implementations of the second aspect, when the instructions are executed by the one or more processors, the electronic device is enabled to perform the following step: obtaining second control information, where the second control information is used to control the electronic device to make a call through the second modem.

With reference to the second aspect, in some implementations of the second aspect, when the instructions are executed by the one or more processors, the electronic device is enabled to perform the following step: storing the second control information.

With reference to the second aspect, in some implementations of the second aspect, the call protocol of the first call is a session description protocol, and the call protocol of the second call is a satellite call protocol; or the call protocol of the first call is the satellite call protocol, and the call protocol of the second call is the session description protocol.

According to a third aspect, a call switching apparatus is provided and includes: a processor coupled to a memory, where the memory is configured to store a computer program, and the processor is configured to run the computer program, so that the call switching apparatus performs the method according to any one of the first aspect and the possible implementations of the first aspect.

With reference to the third aspect, in some implementations of the third aspect, the call switching apparatus further includes one or both of the memory and a transceiver, and the transceiver is configured to receive a signal and/or send a signal.

According to a fourth aspect, a computer-readable storage medium is provided. The computer-readable storage medium stores a computer program, and when the computer program is executed by a computer, the computer is enabled to implement the method according to any one of the first aspect and the possible implementations of the first aspect.

According to a fifth aspect, a computer program product including instructions is provided. When the computer program product runs on a computer, the computer is enabled to perform the method according to any one of the first aspect and the possible implementations of the first aspect.

According to a sixth aspect, a chip is provided. The chip includes a processor and a data interface, and the processor reads, through the data interface, instructions stored in a memory, to perform the method according to any one of the first aspect and the possible implementations of the first aspect.

With reference to the sixth aspect, in a possible implementation, the processor is coupled to the memory through the interface.

With reference to the sixth aspect, in a possible implementation, the chip system further includes the memory. The memory stores a computer program or the computer instructions.

### BRIEF DESCRIPTION OF DRAWINGS

FIG. 1 is a diagram of a structure of an electronic device;
FIG. 2 is a block diagram of a software structure of an electronic device;
FIG. 3 is a diagram of a system architecture according to an embodiment of this application;
FIG. 4(a) and FIG. 4(b) show a group of GUIs according to an embodiment of this application;
FIG. 5 is a schematic flowchart of a call switching method according to an embodiment of this application;
FIG. 6 is a schematic flowchart of a call switching method according to an embodiment of this application;
FIG. 7 is a schematic flowchart of a call switching method according to an embodiment of this application; and
FIG. 8 is a block diagram of a call switching apparatus according to an embodiment of this application.

### DESCRIPTION OF EMBODIMENTS

The following describes technical solutions of embodiments in this application with reference to accompanying drawings.

Terms used in the following embodiments are merely intended to describe specific embodiments, but are not intended to limit this application. As used in the specification and the appended claims of this application, the singular expressions "a/an", "one", "said", "the foregoing", "the", and "this" are intended to also include such expressions as "one or more", unless otherwise clearly indicated in the context. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of a portable electronic device includes but is not limited to a portable electronic device using iOS^{®}, Android^{®}, Microsoft^{®}, or another operating system. The portable electronic device may alternatively be another portable electronic device, like a laptop (Laptop). It should be further understood that, in some other embodiments, the electronic device may not be the portable electronic device but a desktop computer. In some other embodiments, the electronic device may be an instrument for measurement, such as an oscilloscope.

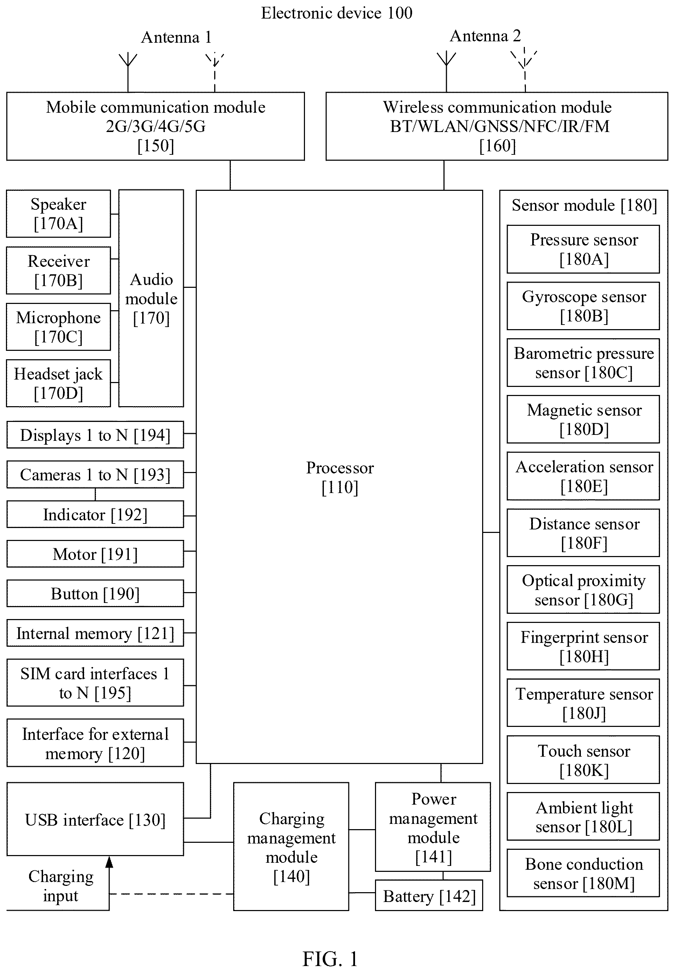

For example, FIG. 1 is a diagram of a structure of an electronic device 100. The electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini light-emitting diode (mini light emitting diodes, Mini LED), a micro light-emitting diode (micro light emitting diode, Micro Led) display, a Micro-oLed, a quantum dot light-emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, simulates a biological neural network structure such as a transmission mode between neurons in a human brain to perform rapid processing on input information, and may further perform continuous self-learning. Applications such as intelligent cognition of the electronic device 100 may be implemented through the NPU, for example, image recognition, facial recognition, speech recognition, and text understanding.

The interface for external memory 120 may be used to connect to an external storage card, for example, a micro SD card, to extend a storage capability of the electronic device 100. The external memory card communicates with the processor 110 through the interface for external memory 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, and may further include a non-volatile memory, for example, at least one magnetic disk storage device, a flash memory, and a universal flash storage (universal flash storage, UFS). The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a speech.

The microphone 170C, also referred to as a "mike" or a "mic", is configured to convert a sound signal into an electrical signal. When making a call or sending a speech message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is greater than or equal to a first pressure threshold acts on an alarm clock application icon, an instruction for creating an alarm clock is executed.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. For example, when a mobile phone detects a touch operation of a user on a lock screen interface, the mobile phone may collect fingerprint information of the user through the fingerprint sensor 180H, and match the collected fingerprint information with fingerprint information preset in the mobile phone. If matching succeeds, the mobile phone may enter a non-lock screen interface from the lock screen interface.

The touch sensor 180K is also referred to as a "touch panel". The touch sensor 180K may be disposed in the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. Visual output related to the touch operation may be provided through the display 194. In some other embodiments, the touch sensor 180K may also be disposed on a surface of the electronic device 100 at a location different from that of the display 194.

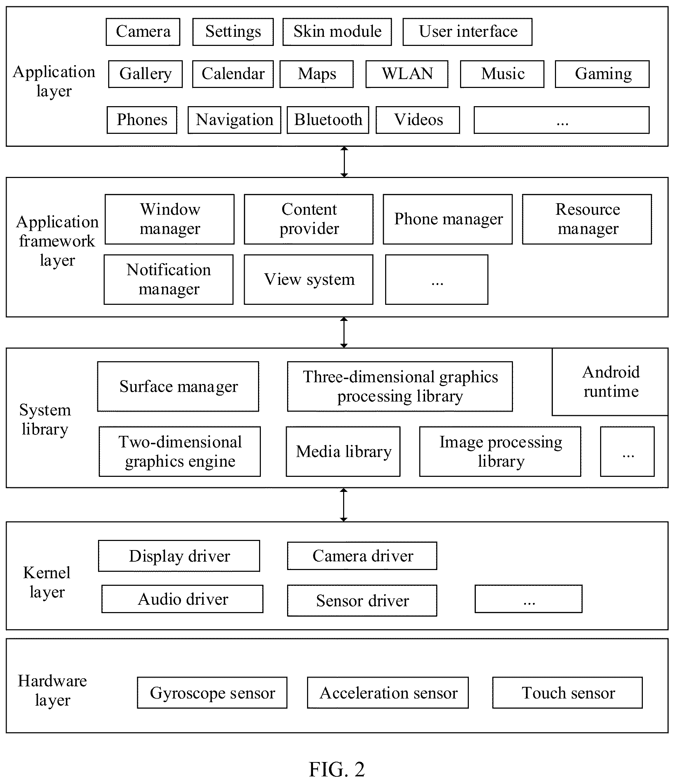

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application layer may include Camera, Settings, a skin module, a user interface (user interface, UI), a third-party application, and the like. The third-party application may include Gallery, Calendar, Phones, Maps, Navigation, WLAN, Bluetooth, Music, Videos, Messages, and the like.

The application framework layer provides an application programming interface (application programming interface, API) and a programming framework for an application at the application layer. The application framework layer may include some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct an application. A display interface may include one or more views.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification-type message. The message may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that runs on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, an OpenGL ES), and a two-dimensional graphics engine (for example, an SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

In addition, the system library may further include a status monitoring service module, for example, a physical status identification module, configured to analyze and identify a user gesture; and a sensor service module, configured to monitor sensor data uploaded by various sensors at a hardware layer, to determine a physical status of the electronic device 100.

The kernel layer is a layer between hardware and software. The kernel layer includes at least a display driver, a camera driver, an audio driver, and a sensor driver.

The hardware layer may include various sensors, for example, various sensors described in FIG. 1.

With reference to the electronic device described in FIG. 1 and FIG. 2, in embodiments of this application, the electronic device may be a device that can implement a call function, like a mobile phone terminal or a tablet computer. Physical components related to the electronic device 100 mainly include hardware components such as a sensor, a decision support system (decision support system, DSS) display chip, a touchscreen, and a fingerprint recognition module; kernel software layers such as a screen management module, a display driver, a fingerprint driver, and anti-accidental touch; application framework layer functions such as anti-accidental touch input, screen control, an always on display (always on display, AOD) service, and power management; and application layer services such as a special adaptation application (camera), a third-party application, system sleep, and AOD.

With the development of science and technology, the electronic device can support calls of different protocols. A modem carried on the electronic device can be compatible with call protocols such as a session description protocol (session description protocol, SDP) and a session announcement protocol (session announcement protocol, SAP). However, if a service such as a satellite call can be provided on the electronic device, the modem carried on the electronic device currently cannot be compatible. Therefore, to enable a user to make calls with different protocols on the electronic device, the electronic device needs to carry modems supporting different call protocols. When the user switches between different calls, the plurality of modem components carried on the electronic device also need to be switched with the call switching. When switching is performed between different modem components, switching of an audio physical path and audio data path corresponding to a modem component needs to be considered.

In view of the foregoing requirement of the user for making the calls with the different protocols on the electronic device, this application provides a call switching method and apparatus, and an electronic device, to support the requirement of the user for the calls with the different protocols, switch a corresponding audio physical path and audio data path while switching a modem component, and ensure call effect when the user switches a call.

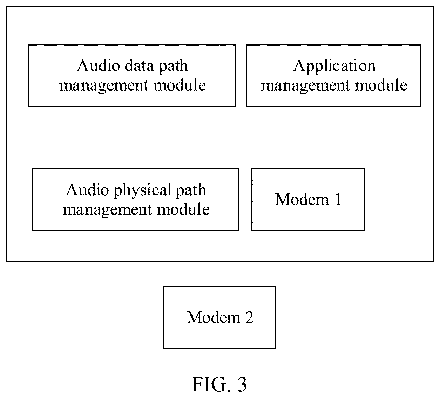

FIG. 3 shows a system architecture to which an embodiment of this application is applicable. The system architecture may be carried on an electronic device supporting a call function, for example, a mobile phone terminal. The following specifically describes the system architecture.

Specifically, the system architecture of the electronic device may include an audio physical path management module, an audio data path management module, an application management module, a modem 1 module, and a modem 2 module. The application management module is configured to control switching of a modem. The modem 1 module and the modem 2 may be components supporting two different call protocols. For example, the modem 1 module supports an SDP call protocol, and the modem 2 module supports a satellite call protocol. The audio physical path management module, the audio data path management module, the application management module, and the modem 1 module may be integrated into a system on a chip (system on a chip, SoC). The modem 2 module may be a module externally connected to the original chip, and may be connected to the audio data path management module via the audio physical path module.

In some embodiments, the application management module may carry a plurality of specific modules, for example, an Android application package (Android application package, APK) layer, a framework (framework, FWK) layer, and a hardware abstraction layer (hardware abstraction layer, HAL). For example, a call function may be initiated by the APK, and a use status of a modem is delivered by the FWK and the HAL in sequence. The application management module may send control information to the audio physical path management module and the audio data path management module based on the use status of the modem. Based on the control information, the audio data path management module implements selection of an audio data source and a consumption route and implements a data movement function by configuring corresponding direct memory access (direct memory access, DMA). Based on the control information, the audio physical path management module implements activation of an uplink audio path and a corresponding modem connection path, so that a modem module that is switched to connect a physical path of an uplink device (for example, a microphone) of the mobile phone and a physical path of a downlink device (for example, a speaker) of the mobile phone. For example, the audio data path management module may process control information from the application management module, and the audio physical path management module may directly receive processed information from the application management module, and establish a corresponding physical path.

It should be noted that the modules in the system architecture shown in FIG. 3 may respectively correspond to the layered architecture of the electronic device shown in FIG. 2. For example, the modem 1 module and the modem 2 module belong to the hardware layer, and the audio physical path management module and the audio physical path management module belong to the kernel layer. The application management module may belong to an HAL layer, and the HAL layer may be located above the kernel layer and below the framework layer.

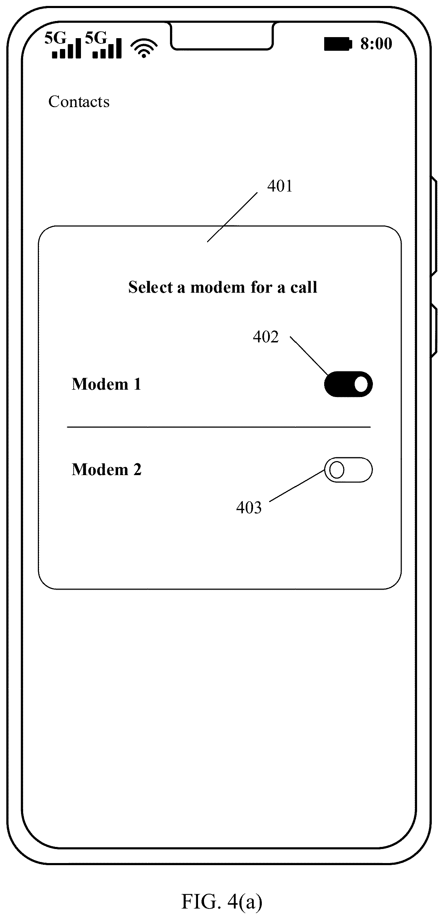

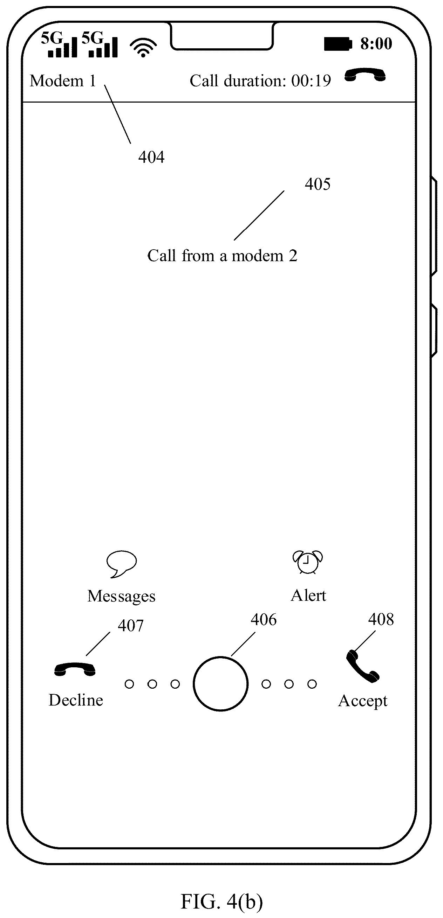

For ease of understanding, FIG. 4(a) and FIG. 4(b) show a group of graphical user interfaces (graphical user interfaces, GUIs). A scenario in which the call switching method provided in this application can be used is provided. A user may select a modem for a call, or switch a modem for a call. The following uses a mobile phone terminal as an example to describe the scenario to which the call switching method provided in this application is applicable.

FIG. 4(a) shows a contacts interface of the mobile phone terminal of the user. The contacts interface displays selection prompt information 401, and the prompt information 401 is used to prompt the user to select a modem for a call. The prompt information 401 includes a plurality of controls, and the plurality of controls include a modem 1 control 402 and a modem 2 control 403. A control is a visual graphical interface element presented to the user, and is a software component included in an application, and controls data processed by the application and an interaction operation about the data. The user may interact with the control through an operation like touch or slide, to read and edit related information of the application. Generally, the control may include visual interface elements such as an icon, a button, a menu, a tab, a text box, and a status bar. In response to an operation (for example, a touch operation, a tap operation, or a slide operation) performed by the user on different controls, the electronic device may display different interfaces on a screen or perform corresponding processing. In response to an operation of tapping the modem 1 control 402 by the user, the user may make a call through the modem 1. Certainly, if the user taps the modem 2 control 403, the user may make a call through the modem 2. In other words, before actively making a call, the user may select a modem to be used.

FIG. 4(b) shows a call interface of the mobile phone terminal of the user. The call interface displays call information 404 and incoming call information 405. The call information 404 indicates that the user is currently making a call through a modem 1. The incoming call information 405 indicates that the user receives an incoming call from a modem 2 when the user is making the call through the modem 1. The call interface displays a select control 406, and further displays a plurality of icons. The plurality of icons include a decline icon 407 and an accept icon 408. In response to the user sliding the select control 406 in a direction of the accept icon 408, the call from the modem 2 can be answered. Therefore, the call from the modem 1 is switched to the call from the modem 2.

Based on the foregoing solution, the electronic device can support the user in selecting a modem for a call on the user interface, for example, FIG. 4(a); and can also support the user in switching a call, for example, in FIG. 4(b). When the user triggers call switching on the user interface, the electronic device can dynamically select a corresponding modem, and switch a corresponding audio physical path and audio data path, to implement a normal call function while the user is unaware of a switching process.

The following separately describes specific implementations of the call switching method provided in this application in the foregoing two scenarios.

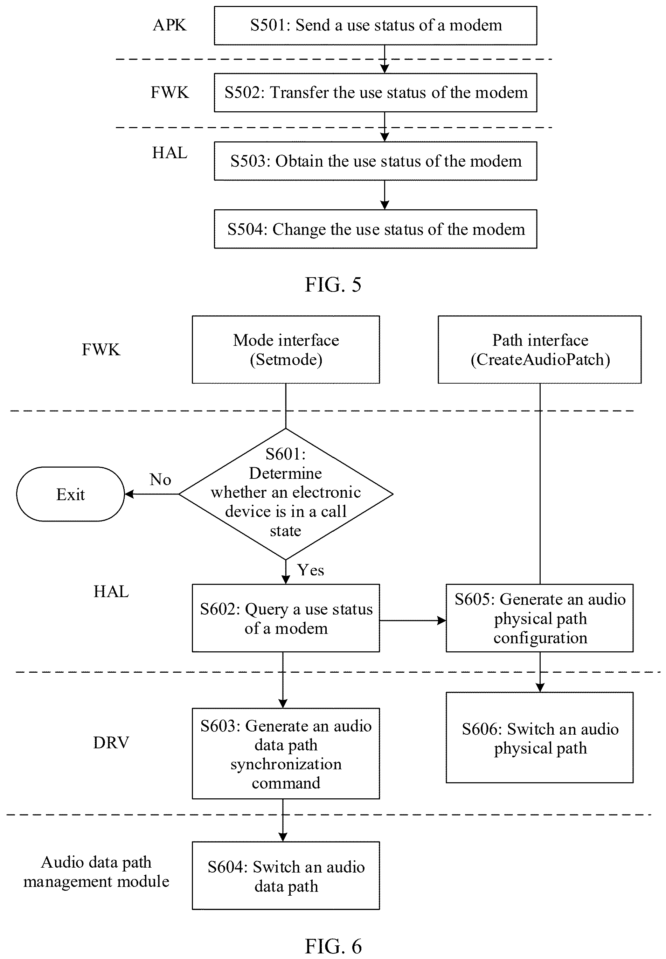

FIG. 5 shows a specific manner in which the electronic device switches the audio physical path and audio data path in the scenario in which the user selects a modem for a call.

S501: Send a use status of the modem.

S502: Transfer the use status of the modem.

S503: Obtain the use status of the modem.

S504: Change the use status of the modem.

It should be noted that steps S501 to S504 may be performed by the application management module shown in FIG. 3.

For example, the application management module may include an APK layer, an FWK layer, and a HAL layer. Steps S501 to S504 may be performed by specific virtual modules carried in the application management module.

For example, an APK may send the use status of the modem based on an operation of a user on a user interface, and an FWK transfers the use status of the modem to an HAL. The HAL obtains the use status of the modem from the FWK, and changes the use status of the modem.

It should be noted that when the user selects the modem for a call in an interaction manner shown in FIG. 4(a), for a trigger operation of the user, the application management module of the electronic device generates the use status of the modem, and changes the use status of the modem.

For example, when the user selects the modem 1 on the user interface, the use status, of the modem, sent by the APK is using the modem 1 for a call. In the application management module, the use status of the modem is delivered to the HAL in sequence. The HAL changes the use status of the modem to be using the modem 1 for a call. That the HAL changes the use status of the modem may also be understood as that the HAL sets the use status of the modem.

In some embodiments, the application management module generates control information based on an operation of the user on the user interface, and sends the control information to the audio data path management module and the audio physical path management. The audio data path management module and the audio physical path management module may establish or switch the audio data path and physical path based on the control information.

In some embodiments, when changing the use status of the modem, the HAL may further synchronously write the status of the modem into a partition in the electronic device, for example, a non-volatile (non-volatile, NV) partition. In other words, after the HAL obtains the use status of the modem, a partition in the electronic device obtains the use status, of the modem, updated in real time. In this way, if the application management module cannot deliver the control information, it is ensured that the partition in the electronic device has the latest use status of the modem, and when the user still attempts to make a call through the modem next time, the use status of the modem in the partition can be invoked.

Further, to implement dynamic switching of a call, the electronic device may continue to perform steps shown in FIG. 6.

S601: Determine whether the electronic device is in a call state.

S602: Query a use status of a modem.

S603: Generate an audio data path synchronization command.

S604: Switch an audio data path.

S605: Generate an audio physical path configuration.

S606: Switch an audio physical path.

For example, step S601 to step S603, and step S605 and step S606 may be performed by the application management module. Step S604 may be performed by the audio data path management module.

It should be noted that the FWK layer carries two interfaces including a mode (Setmode) interface and a path interface (Create Audio Patch). Each time the user triggers call switching on the user interface, the electronic device may first perform the steps shown in FIG. 5, so that the HAL obtains the latest use status of the modem.

The mode interface and the path interface are common interfaces of Android. The mode interface may be used to set an audio mode, and the electronic device may determine and set a stream status based on the audio mode. The path interface may be understood as setting a path. The two interfaces are called when a standard Android system starts a stream, and switching of the use status of the modem may be attached to calling of the two interfaces.

For example, the mode interface of the FWK delivers control information, to trigger the HAL to determine whether the electronic device is in the call state. The HAL may determine whether the electronic device is in the call state when audio data changes, and the change of the audio data may be triggered by an interaction operation of the user on the user interface. When the HAL determines that the electronic device is not in the call state, the electronic device does not perform a subsequent step. When the HAL determines that the electronic device is in the call state, the electronic device may further query the use status of the modem, which may be understood as determining which modem the user uses for a call. When the HAL found that switching occurs on the use status of the modem (for example, the user switches the call from the modem 1 to the call from the modem 2), a driver group (driver group, DRV) may generate the audio data path synchronization command, and deliver the command to the audio data path management module. The audio data path management module may switch the audio data path (for example, switch to a data path of the modem 2). In addition, the HAL may further generate audio physical path configuration information, and the DRV may switch the audio physical path (for example, switch to a physical path of the modem 2) based on the audio physical path configuration information. The DRV may also be carried in the application management module shown in FIG. 3.

For ease of understanding, an example in which the user triggers modem call switching shown in FIG. 4(b) is used to describe the foregoing steps. When making a call through the modem 1, the user receives a call request from the modem 2. When the user receives a call from the modem 2, the application management module of the electronic device determines that the electronic device is in a call state, determines that the use status of the modem is switching to the modem 2 for the call, generates control information based on the latest use status of the modem, and delivers the control information to the audio data path management module. The audio data path management module establishes a data path corresponding to the modem 2, and the audio physical path management module establishes a physical path corresponding to the modem 2. This ensures that the user answers the call from the modem 2 while the user is unaware of a call switching process, and ensures a normal call of the user.

Based on the foregoing solution, when the user triggers modem call switching on the user interface, the electronic device can implement dynamic switching between a plurality of internal modems. In other words, when a call status changes, the application management module updates a use status of a modem, generates corresponding control information based on the use status of the modem, and delivers the control information to the audio data path management module. The audio data management module establishes a corresponding data path, and the audio physical path management module establishes a corresponding physical path, to implement real-time call switching.

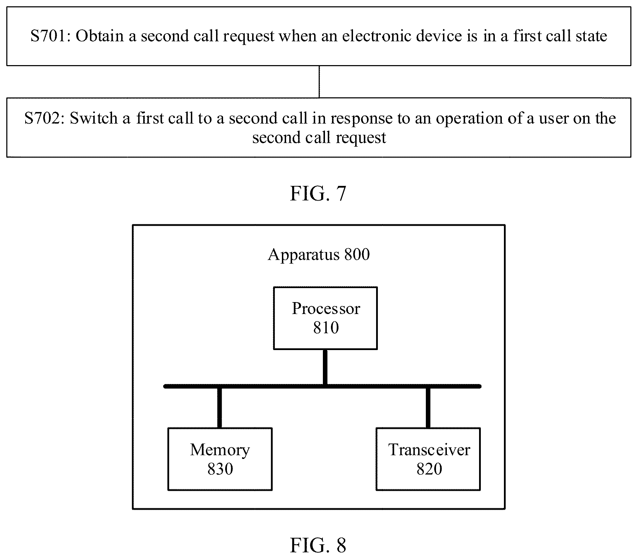

FIG. 7 is a schematic flowchart of a call switching method according to an embodiment of this application. The method is applicable to the system architecture shown in FIG. 3. The following specifically describes the method.

S701: Obtain a second call request when an electronic device is in a first call state.

For example, the electronic device includes a first modem (modem) and a second modem, the first modem is configured to process data of a first call, the second modem is configured to process data of a second call, and a call protocol of the first call is different from a call protocol of the second call. For example, the call protocol of the first call may be an SDP call protocol, and the call protocol of the second call may be a satellite call protocol; or the call protocol of the first call may be the satellite call protocol, and the call protocol of the second call may be the SDP call protocol. In other words, the first modem may support the SDP call protocol, and the second modem may support the satellite call protocol; or the first modem may support the satellite call protocol, and the second modem may support the SDP call protocol. The first modem may be the modem 1 module shown in FIG. 3, and the second modem may be the modem 2 module shown in FIG. 3; or the first modem may be the modem 2 module shown in FIG. 3, and the second modem may be the modem 1 module shown in FIG. 3. A modem supporting a satellite call protocol may be externally connected to an original chip.

It should be noted that when the electronic device is in the first call state, the first modem is established, and correspondingly, an audio physical path of the first call and an audio data path of the first call are established, so that a call function of the first call is normal. That the electronic device is in the first call state may be understood as that the electronic device is in the first call.

In some embodiments, before a call, the corresponding call may be triggered through an operation of a user on a user interface. For example, the electronic device may display a first modem control. When the electronic device detects the operation of the user on the first modem control, the electronic device may make a call through the first modem in response to the operation of the user on the first modem control, that is, the electronic device is in the first call state.

In some embodiments, when the electronic device detects the operation of the user on the first modem control, the electronic device may obtain first control information in response to the operation of the user on the first modem control, where the first control information is used to control the electronic device to make a call through the first modem; and the electronic device may make the first call through the first modem based on the first control information.

For example, as shown in FIG. 4(a) and FIG. 4(b), the first modem control may be the modem 1 control 402 shown in FIG. 4(a). The electronic device responds to the operation of touching (for example, tapping, double tapping, or touching and holding) the modem 1 control 402 by the user. The user may make a call through the modem 1. In other words, the electronic device may trigger the first call. In other words, before the user actively makes a call, the user may also select, on the user interface, a modem to be used for the call.

It should be noted that the first control information may be understood as a use status of the first modem, and the use status of the first modem may be understood as using the first modem for a call.

S702: Switch the first call to the second call in response to an operation of the user on the second call request.

For example, in response to the operation of the user on the second call request, the electronic device may switch an audio physical path of the first call to an audio physical path of the second call, and may switch an audio data path of the first call to an audio data path of the second call.

It should be noted that the operation of the user on the second call request may be understood as an operation of triggering call switching by the user. When the user triggers call switching, the electronic device may generate an audio data synchronization command and an audio physical path configuration, determine the audio data path of the second call based on the audio data synchronization command, and determine the audio physical path of the second call based on the audio physical path configuration. It may be understood that the audio physical path and audio data path of the second call may be obtained based on adjustment of the audio physical path and audio data path of the first call. A process in which the electronic device determines the audio physical path and audio data path of the second call and a process in which the electronic device switches to the audio physical path and audio data path of the second call may be continuously performed.

For example, in a call process, a modem needs to write data into a memory, and different modems write data into different addresses of the memory. In other words, a memory address (for example, a memory address A) corresponding to the audio data path of the first call is different from a memory address (for example, a memory address B) corresponding to the audio data path of the second call. When the first call is switched to the second call, the audio data path of the first call is switched to the audio data path of the second call, and a memory address to which the data is written is switched from the memory address A to the memory address B. A DSP may invoke the data from the corresponding memory for processing. Switching the audio physical path of the first call to the audio data path of the second call enables establishment of the second modem, an uplink device (for example, a microphone), and a downlink device (for example, a speaker) of the electronic device, and ensures that the electronic device can normally receive audio and normally output the audio when the electronic device is in a second call state.

For example, the electronic device may display a second modem control. As shown in FIG. 4(a) and FIG. 4(b), the second modem control may be the modem 2 control 403 shown in FIG. 4(a). In response to the user touching (for example, a tap, a double tap, or a touch and hold operation) on the modem 2 control 403, the electronic device may trigger the second call. In other words, before the user actively makes a call, the user may select, on the user interface, a modem to be used for the call.

For example, the electronic device may make the call through the second modem in response to the operation of the user on the user interface.

In some embodiments, before the electronic device switches the first call to the second call, in response to the operation of the user on the second call request, the electronic device may make the call through the second modem. For example, the electronic device may obtain second control information, where the second control information may be used to control the electronic device to make the call through the second modem.

For example, as shown in FIG. 4(a) and FIG. 4(b), when the electronic device is in the first call state, the electronic device may display the interface shown in FIG. 4(b). The call information 404 indicates that the user is making the call through the modem 1. In other words, the call information 404 indicates that the electronic device is in the first call state. When the electronic device receives the second call request, the electronic device displays the incoming call information 405. The incoming call information 405 indicates that the user receives the incoming call from the modem 2 when the user is making the call through the modem 1. In other words, the second call request indicates a call request corresponding to a call protocol of the second modem. In response to the operation of the user on the second call request, the electronic device switches the call from the modem 1 to the call from the modem 2. For example, the operation of the user on the second call request may be sliding the select control 406 in the direction of the icon 408, to switch the call from the modem 1 to the call from the modem 2.

It may be understood that the second call request may be displayed on the user interface in a manner of information (for example, the incoming call information 405), an option, or a control, to help the user learn of new incoming call information.

For example, the second control information may be understood as a use status of the second modem, and the use status of the second modem may be understood as using the second modem for a call.

In some embodiments, the electronic device may obtain second control information in response to the operation of the user on the second call request, to switch the call from the modem 1 to the call from the modem 2

In some embodiments, when the electronic device obtains the second control information, the electronic device may store the second control information while switching to the second call based on the second control information.

In other words, when the electronic device obtains the use status of the modem, the electronic device may synchronously write the use status of the modem into a partition (for example, an NV partition) in the electronic device. The partition in the electronic device may update the use status of the modem in real time. In this way, when the electronic device cannot implement call switching based on the use status of the modem, the electronic device can invoke the use status of the modem in the partition in a next attempt of call switching, to reduce power consumption of next call switching.

Based on the foregoing solution, when the user triggers call switching on the user interface, the electronic device can dynamically switch between modems supporting different call protocols, and switch the corresponding audio physical path and audio data path. This ensures normal call of the user while the user is unaware of a switching process. For example, the electronic device may respectively switch the audio physical path and audio data path of the first call to the audio physical path and audio data path of the second call, to ensure that a call function of the electronic device is normal when the electronic device switches to the second call.

FIG. 8 is a block diagram of a call switching apparatus according to an embodiment of this application. The call switching apparatus 800 shown in FIG. 8 may include a processor 810, a transceiver 820, and a memory 830. The processor 810, the transceiver 820, and the memory 830 are connected through an internal connection path. The memory 830 is configured to store instructions. The processor 810 is configured to execute the instructions stored in the memory 830, to enable the transceiver 830 to receive/send some parameters. Optionally, the memory 830 may be coupled to the processor 810 through an interface, or may be integrated with the processor 810.

It should be noted that the transceiver 820 may include but is not limited to a transceiver apparatus, for example, an input/output interface (input/output interface), to implement communication between the call switching apparatus 800 and another device or a communication network.

In an implementation process, steps of the foregoing methods may be implemented by using an integrated logic circuit of hardware in the processor 810 or instructions in a software form. The method disclosed with reference to embodiments of this application may be directly performed by a hardware processor, or may be performed by using a combination of hardware in the processor and a software module. A software module may be located in a mature storage medium in the art, like a random access memory, a flash memory, a read-only memory, a programmable read-only memory, an electrically erasable programmable memory, or a register. The storage medium is located in the memory 830, and the processor 810 reads information in the memory 830 and completes the steps in the foregoing methods in combination with hardware of the processor. To avoid repetition, details are not described herein again.

It should also be understood that in embodiments of this application, the memory may include a read-only memory and a random access memory, and provide instructions and data to the processor. A part of the processor may further include a non-volatile random access memory. For example, the processor may further store information of a device type.

An embodiment of this application provides a computer program product. When the computer program product runs on a device, the device is enabled to perform the technical solutions of the foregoing embodiments. An implementation principle and technical effect of the program product are similar to those in the foregoing method-related embodiments. Details are not described herein again.

An embodiment of this application provides a readable storage medium. The readable storage medium includes instructions. When the instructions are run on a device, the device is enabled to perform the technical solutions of the foregoing embodiment. An implementation principle and technical effect of the readable storage medium are similar. Details are not described herein again.

An embodiment of this application provides a chip. The chip is configured to execute instructions. When the chip runs, the technical solutions in the foregoing embodiment are performed. An implementation principle and technical effect of the chip are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing apparatus and units (modules), refer to a corresponding process in the foregoing method embodiments, and details are not described herein again.

In the several embodiments provided in this application, it should be understood that the disclosed device, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A call switching method, wherein the method is applied to an electronic device and comprises:
the electronic device comprises a first modem and a second modem, the first modem is configured to process data of a first call, the second modem is configured to process data of a second call, and a call protocol of the first call is different from a call protocol of the second call;
obtaining a second call request when the electronic device is in a first call state; and
switching the first call to the second call in response to an operation of a user on the second call request.

2. The method according to claim 1, wherein when the electronic device is in the first call state, an audio physical path of the first call and an audio data path of the first call are established; and
switching the first call to the second call in response to the operation of the user on the second call request comprises:
switching the audio physical path of the first call to an audio physical path of the second call in response to the operation of the user on the second call request; and
switching the audio data call of the first call to an audio data path of the second call.

3. The method according to claim 1 or 2, wherein before the electronic device is in the first call state, the method further comprises:
displaying, by the electronic device, a first modem control and a second modem control;
obtaining first control information in response to an operation of the user on the first modem control, wherein the first control information is used to control the electronic device to make a call through the first modem; and
triggering the first call based on the first control information.

4. The method according to any one of claims 1 to 3, wherein before switching the first call to the second call, the method further comprises:
obtaining second control information, wherein the second control information is used to control the electronic device to make a call through the second modem.

5. The method according to claim 4, wherein the method further comprises:
storing the second control information.

6. The method according to any one of claims 1 to 5, wherein
the call protocol of the first call is a session description protocol, and the call protocol of the second call is a satellite call protocol; or
the call protocol of the first call is the satellite call protocol, and the call protocol of the second call is the session description protocol.

7. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the following steps:
the electronic device comprises a first modem and a second modem, the first modem is configured to process data of a first call, the second modem is configured to process data of a second call, and a call protocol of the first call is different from a call protocol of the second call;
obtaining a second call request when the electronic device is in a first call state; and
switching the first call to the second call in response to an operation of a user on the second call request.

8. The electronic device according to claim 7, wherein when the electronic device is in the first call state, an audio physical path of the first call and an audio data path of the first call are established; and
switching the first call to the second call in response to the operation of the user on the second call request, wherein when the instructions are executed by the one or more processors, the electronic device is enabled to perform the following steps:
switching the audio physical path of the first call to an audio physical path of the second call in response to the operation of the user on the second call request; and
switching the audio data call of the first call to an audio data path of the second call.

9. The electronic device according to claim 7 or 8, wherein when the instructions are executed by the one or more processors, the electronic device is enabled to perform the following steps:
before the electronic device is in the first call state, displaying, by the electronic device, a first modem control and a second modem control;
obtaining first control information in response to an operation of the user on the first modem control, wherein the first control information is used to control the electronic device to make a call through the first modem; and
triggering the first call based on the first control information.

10. The electronic device according to any one of claims 7 to 9, wherein when the instructions are executed by the one or more processors, the electronic device is enabled to perform the following step:
obtaining second control information, wherein the second control information is used to control the electronic device to make a call through the second modem.

11. The electronic device according to claim 10, wherein when the instructions are executed by the one or more processors, the electronic device is enabled to perform the following step:
storing the second control information.

12. The electronic device according to any one of claims 7 to 11, wherein
the call protocol of the first call is a session description protocol, and the call protocol of the second call is a satellite call protocol; or
the call protocol of the first call is the satellite call protocol, and the call protocol of the second call is the session description protocol.

13. A call switching apparatus, comprising a processor coupled to a memory, wherein the memory is configured to store a computer program, and the processor is configured to run the computer program, so that the call switching apparatus performs the method according to any one of claims 1 to 6.

14. The call switching apparatus according to claim 13, further comprising one or both of the memory and a transceiver, wherein the transceiver is configured to receive a signal and/or send a signal.

15. A computer-readable storage medium, wherein the computer-readable storage medium stores a computer program; and when the computer program is executed by a computer, the computer is enabled to implement the method according to any one of claims 1 to 6.

16. A computer program product comprising instructions, wherein when the computer program product runs on a computer, the computer is enabled to perform the method according to any one of claims 1 to 6.

17. A chip, wherein the chip comprises a processor and a data interface, and the processor reads, through the data interface, instructions stored in a memory, to perform the method according to any one of claims 1 to 6.
